# EUROPÄISCHE PATENTSCHRIFT

(11) **EP 0 685 676 B1**
(45) Veröffentlichungstag und Bekanntmachung des Hinweises auf die Patenterteilung: **09.02.2000**
(21) Anmeldenummer: 95108379.9
(22) Anmeldetag: 01.06.1995
(51) Int. Cl.: F16L 11/12, B41M 1/14

(54) **Sanitärschlauch mit einer eingefärbten und/oder metallisierten Oberfläche und Verfahren zu seiner Herstellung**
Sanitary hose having a coloured and/or metallized surface and method for manufacturing
Tuyau sanitaire à surface colorée et/ou métallisée et procédé de fabrication

(30) Priorität: 01.06.1994 DE 4419120; 18.03.1995 EP 95104016
(43) Veröffentlichungstag der Anmeldung: 06.12.1995
(73) Patentinhaber: Hansgrohe AG, 77761 Schiltach (DE)
(72) Erfinder: Waidele, Armin, D-78730 Lauterbach (DE); Katzer, Dieter, D-77716 Haslach (DE)
(74) Vertreter: Patentanwälte Ruff, Beier, Schöndorf und Mütschele

(56) Entgegenhaltungen:
- EP-A- 0 249 896
- EP-A- 0 412 492
- EP-A- 0 616 905
- DE-A- 3 700 211
- DE-A- 3 840 721
- DE-U- 7 714 185
- GB-A- 2 067 260
- US-A- 4 275 768
- DATABASE WPI Section Ch, Week 8112 Derwent Publications Ltd., London, GB; Class A32, AN 81-20112D XP002004621 & JP-A-56 006 980 (YOSHINO KOGYOSHO KK) , 24.Januar 1981

## Beschreibung

Die Erfindung betrifft einen Sanitärschlauch und dergleichen, mit einer eingefärbten, insbesondere metallisierten Oberfläche. Die ursprüngliche Chromfarbe der Metallschläuche ist auch bei Sanitärschläuchen mit einer Oberfläche aus Kunststoff nach wie vor beliebt, insbesondere auch deshalb, weil zahlreiche Sanitärarmaturen aus verchromtem Messing oder chromfarbenem Kunststoff bestehen. Bei doppelwandigen Brauseschläuchen mit Verstärkungswendel kann man den Chromeffekt dadurch erzeugen, daß die Verstärkungswendel bandförmig ausgebildet und an ihrer Oberfläche mit einem metallisierten Dekorbändchen belegt wird. Ein bleibender Verbund zwischen Verstärkungswendel und dem lose aufliegenden Dekorbändchen kann dadurch erreicht werden, daß beide gemeinsam mit Weichplastik überzogen werden. Derartige doppelwandige Brauseschläuche ermöglichen keine vollflächige Metallisierung und sind außerdem relativ kompliziert aufgebaut. Es ist deshalb wünschenswert, an der Oberfläche eingefärbte und/oder metallisierte Sanitärschläuche zu schaffen, bei denen die Einfärbung bzw. die Metallisierung nicht an bestimmte konstruktive Merkmale gebunden ist.

Gemäß der Erfindung weist der Sanitärschlauch als Träger für die Farbe und/oder Metallisierung mindestens eine Heißprägefolie auf, die mit einer mindestens teilweise nach außen sichtbaren Außenseite eines vorgefertigten Schlauches verbunden ist und diese bedeckt. Heißprägefolien sind dünne wärmewirksame Kleberschichten, die auf einer Seite eine Metallisierung oder Einfärbung aufweisen und durch Anwendung von Wärme und Druck auf Oberflächen aufgebracht werden können. Die Heißprägefolie ist durch Verklebung mit der Schlauchaußenseite verbunden. Die Einfärbung und/oder Metallisierung befindet sich insbesondere auf einer Oberflächenseite der Kleberschicht, vorzugsweise auf deren Außenseite. Die metallisierte oder eingefärbte Klebeschicht ist häufig mit einem Schutzlack überzogen. Der Schutzlack ist vorzugsweise ein Klarlack. Der Schutzlack kann eingefärbt sein, um der metallisierten und/oder eingefärbten Kleberschicht gewünschte Farbeffekte zu verleihen. So können beispielsweise bei gleicher Metallisierung, z.B. aus Aluminium, durch Einfärbung des Klarlacks die Farben anderer Metalle, z.B. Chrom, Messing und Kupfer, imitiert werden. Die Anschlußnippel, z.B. eines Brauseschlauches, können dann die gleiche Farbe besitzen. Für die Durchführung der Heißprägung befindet sich die Heißprägefolie auf einem Trägerband, das nach dem Aufprägen der Heißprägefolie abgezogen wird. Zwischen Trägerband und Kleberschicht bzw. Schutzlack findet sich normalerweise eine Trennschicht, die ein problemloses Abziehen des Trägerbandes ermöglicht.

Der Schlauch, mit dem die Heißprägefolie verbunden ist, ist insbesondere ein Kunststoffschlauch. Gemäß der Erfindung ist es bevorzugt, daß die Heißprägefolie die Schlauchaußenseite vollständig bedeckt. Überraschenderweise hat es sich gezeigt, daß die auf die Schlauchaußenseite aufgeprägte Heißprägefolie mit ihrer eingefärbten und/oder metallisierten Schicht Bewegungen des Schlauches, insbesondere Dehnungen und Stauchungen von Schlauchabschnitten, mitmacht, ohne Risse oder Runzeln zu zeigen. Die mit dem Schlauch verbundene Heißprägefolie ist somit ein integrierter Bestandteil des Schlauchmaterials. Die Heißprägefolie kann die äußere Oberfläche des Schlauches bilden. Da die Metallisierung bzw. die Einfärbung sehr dünn und deshalb sehr empfindlich ist, ist die Heißprägefolie vorzugsweise zumindest mit einer Schutzschicht, z.B. einem oben erwähnten Schutzlack der Heißprägefolie versehen. Insbesondere bei mechanischer Beanspruchung des Schlauches ist jedoch ein weitgehender Oberflächenschutz vorgesehen. Dieser kann von einer mindestens stellenweise durchsichtigen und/oder durchscheinenden Schutzfolie gebildet sein. Eine solche Schutzfolie ist mit Vorteil eine aufextrudierte Schlauchfolie. Eine solche Schlauchfolie kann eine Materialstärke von 0,1 mm - 1 mm oder mehr besitzen und mit Vorteil den Außenschlauch eines mehrschichtigen, insbesondere doppelwandigen Sanitärschlauches bilden. Die aufextrudierte Schlauchfolie kann den mit der Heißprägefolie versehenen Schlauch lediglich mechanisch umgeben, ohne an der Heißprägefolie zu haften. Dies ist insbesondere dann der Fall, wenn die Oberfläche der Heißprägefolie noch mit Resten des Trennmittels versehen ist. In einem solchen Falle kann die aufextrudierte Schlauchfolie bei Biegungen des Schlauches relativ zur Heißprägefolie verschieblich sein. Dies kann zur Erzielung einer guten Flexibilität des Schlauches erwünscht sein. Es ist aber auch möglich, die äußere Schutzfolie bzw. Schlauchfolie so aufzubringen, daß eine Haftverbindung mit der Oberfläche der Heißprägefolie ausgebildet wird.

Die Materialstärke der Heißprägefolie ist in der Regel außerordentlich gering und kann im Bereich von 2 µm - 20 µm, insbesondere 3 µm - 5 µm liegen. Für die Metallisierung bzw. Einfärbung reicht eine Schichtdicke im Bereich von 0,02 µm - 0,03 µm aus. Die Kleberschicht kann ein- oder mehrlagig sein. In der Regel reichen hier Schichtdicken von 1,5 µm - 3 µm aus. Die Kleberschicht der Heißprägefolie kann aber auch durchgefärbt sein, so daß sich die Farbpigmente, insbesondere Metllpigmente in der gesamten Kleberschicht befinden. Das Material der Kleberschicht wird dem in der Regel thermoplastischen Material des Schlauches angepaßt, um eine gute Haftverbindung zu erreichen. Der Schutzlack kann, falls ein solcher vorgesehen ist, eine Stärke im Bereich von 1 µm - 1,5 µm besitzen. Anhand dieser geringen Schichtstärken ist es verständlich, daß die Heißprägefolie selbst eine außerordentlich geringe mechanische Festigkeit besitzt und sich deshalb den mechanischen Eigenschaften des Schlauches anpaßt.

Die Heißprägefolie ist mit Vorteil bandförmig ausgebildet. Sie kann in Längsrichtung verlaufend auf dem Schlauch angeordnet sein, insbesondere in Form mehrerer parallel verlaufender Bänder. Es ist aber auch eine wendelförmig verlaufende Anordnung auf dem Schlauch möglich. Die Heißklebefolien können unter gegenseitiger Überlappung ihrer Ränder auf dem Schlauch angeordnet sein. Dies ist insbesondere bei Heißklebefolien mit geringer Materialstärke bevorzugt, da dann die Verdickung durch die Überlappung nicht spürbar ist. Die Heißklebefolien können auch so angeordnet sein, daß die Ränder fugenlos auf Stoß zueinander angeordnet sind und an den Stoßstellen miteinander verklebt bzw. verschweißt sind. Eine solche Anordnung ist bei Heiprägefolien bevorzugt, bei denen eine gegenseitige Überlappung der Ränder zu einer spürbaren Materialverdickung führen würde. Die Breite eines Bandes aus der Heißprägefolie liegt vorzugsweise in der Größenordnung des Durchmessers des Schlauches. Bei einer solchen Breite ist ein problemloses Aufprägen des Bandes auf den Schlauch möglich, insbesondere bei wendelförmigem Verlauf des Folienbandes. Bei einer Längsanordnung von Heißprägefolienbändern auf dem Schlauch sind zwei bis sechs, insbesondere zwei bis vier Folienstreifen parallel nebeneinander angeordnet. Auch bei wendelförmigem Verlauf können mehrere Folienbänder, insbesondere zwei bis drei Folienbänder nebeneinander angeordnet sein.

Der Sanitärschlauch kann mit Vorteil ein Kunststoffschlauch sein, insbesondere ein Druckschlauch, der zum Führen von Wasser ausgebildet ist. In den Schlauch können in an sich bekannter Weise textile, insbesondere multifile Verstärkungsfäden eingelagert sein. Besonders dann, wenn der Kunststoffschlauch als Druckschlauch ausgebildet ist, können die Verstärkungsfäden sowohl zur Erhöhung der Längsstabilität als auch der Durchmesserstabilität dienen. Hierzu können Scharen von parallel zueinander verlaufenden Verstärkungsfäden linksgängig und rechtsgängig wendelförmig um den Schlauch gewickelt bzw. in diesen eingebettet verlaufen. Dabei können sich die Verstärkungsfäden der linksgängigen und rechtsgängigen Wendeln in einem Kreuzungswinkel im Bereich von ca. 90° überkreuzen. Insbesondere dann, wenn die Verstärkungsfäden in das Material des Schlauches eingebettet sind, können die Fäden der einen Wickelrichtung über den Fäden der anderen Wicklerichtung liegen. Ein gegenseitiges Verflechten ist nicht erfoderlich. Mit Vorteil kann die Struktur der textilen Verstärkungsfäden an der Schlauchoberfläche sichtbar und/oder fühlbar sein. Insbesondere dann, wenn die Verstärkungsfäden unterhalb der Heißprägefolie liegen, was die Regel ist, wird dem Schlauch dadurch eine optische Lebendigkeit verliehen, die auch seine Festigkeit erkennen läßt. Der Schlauch kann als relativ dickwandiger im wesentlichen druckfester Trägerschlauch ausgebildet sein, der mit der Heißprägefolie umgeben ist, wobei ggf. vorgesehene textile Verstärkungsfäden mit Vorteil in das Material des Trägerschlauches eingebettet sind. Der mit der Heißprägefolie versehene Trägerschlauch kann dann von einem zusätzlichen dünnen Außenschlauch umgeben sein. Die Materialstärke des Trägerschlauches bzw. Innenschlauches kann bei 1mm - 4 mm, insbesondere ca. 2,5 mm liegen. Die Materialstärke des Außenschlauches liegt vorzugsweise zwischen 0,3 mm und 1 mm. Der erfindungsgemäße Schlauch kann mit Vorteil als flexibler Brauseschlauch ausgebildet sein und an seinen Enden geeignete Anschlußstücke aufweisen. Es ist aber auch möglich, den erfindungsgemäßen Schlauch als reinen Dekorschlauch vorzusehen, der zum Überziehen von Leitungen, wie Rohr- und Schlauchleitungen, ausgebildet ist. Ein solcher Dekorschlauch kann relativ dünnwandig und labil sein, da er nicht selbsttragend zu sein braucht. Seine gesamte Wandstärke kann unter 1 mm liegen.

Bei einer Ausführungsform der Erfindung ist der Schlauch, mit dem die Heißprägefolie verbunden ist, ein Kunststoffschlauch, der einen Geflechtsschlauch umgibt. Dabei weist der Geflechtsschlauch einen Innenschlauch aus einem flexiblen Material und einen diesen lose umgebenden Schlauchgeflecht bzw. ein Geflechtsschlauch auf. Der Kunststoffschlauch kann auf dem Geflechtsschlauch aufliegen. Vorzugsweise ist der Kunststoffschlauch auf den Geflechtsschlauch aufextrudiert. Der flexible Innenschlauch im Geflechtsschlauch besteht vorzugsweise aus elastomerem Material, insbesondere aus Gummi. Das Geflecht des Geflechtsschlauches ist mit Vorteil ein Drahtgeflecht, insbesondere ein solches mit sich kreuzenden Scharen aus parallel liegenden Drähten. Die Drähte können Metalldrähte sein. Es können auch Kunststoffdrähte sein. Das Drahtgeflecht ist vorzugsweise torsionsstabil. In der Regel liegen 5 - 10 Drähte parallel nebeneinander in einer Schar. Auch textile Geflechte sind brauchbar.

Der mit der Heißprägefolie versehene Schlauch liegt vorzugsweise als Meterware vor, von der Stücke gewünschter Länge inbesondere zur Konfektionierung abgelenkt werden können. Er kann aber auch bereits in bestimmter Länge vorliegen und ggf. konfektioniert sein, insbesondere an seinen Enden Anschlußteile zur wasserdichten Montage aufweisen. Befestigungsmittel für die Anschlußteile, insbesondere Klemmhülsen, können dabei die Heißprägefolie übergreifen. In besonderen Fällen, z.B. bei Geflechtsschläuchen, kann es aber auch zweckmäßig sein, an den übergreifenden Stellen die Heißprägefolie und die diese tragende Schlauchschicht zu entfernen. Dies kann erwünscht sein, um die Befestigung der Anschlußteile zu erleichtern oder den Durchmesser geringer zu halten.

Die Erfindung betrifft auch ein Verfahren zur Herstellung des erfindungsgemäßen Sanitärschlauches. Dieses Verfahren ist dadurch gekennzeichnet, daß ein vorgefertigter Schlauch an seiner Außenseite mit mindestens einer mit einer Trägerbahn verbundenen Heißprägefolie belegt und die Folie durch Wärme- und Druckanwendung vollflächig und fest mit der Außenseite des Schlauches verbunden wird und die Trägerbahn danach abgezogen wird.

Heißprägefolien werden in der Regel auf feste und insbesondere ebene Oberflächen aufgebracht. Schläuche, insbesondere flexible Kunststoffschläuche sind demgegenüber labile Unterlagen, die eine gewölbte Oberfläche aufweisen. Es wurde jedoch gefunden, daß flexible Schläuche durch Heißprägung metallisiert bzw. eingefärbt werden können, wenn sie mindestens während des Auflegens und Aufprägens der Heißprägefolie in im wesentlichen druckstabiler Form vorliegen. Eine solche druckstabile Form kann dadurch erzielt werden, daß ein Schlauch verwendet wird, der aufgrund seiner Stabilität, insbesondere aufgrund der Materialfestigkeit und/oder Wandstärke, im wesentlichen druckstabil ist. Bei labilen Schläuchen oder dann, wenn eine Erhöhung der Druckstabilität erwünscht ist, kann der Schlauch mit einem Innendruck, insbesondere mit einem Gasinnendruck beaufschlagt werden. Dieser kann je nach Schlauchart, Temperatur und Prägedruck im Bereich von ca. 1 bar bis 5 bar liegen. Dadurch kann der notwendige Anpreßdruck während des Heißprägevorganges erreicht werden. Die Heißprägung wird vorzugsweise kontinuierlich durchgeführt, indem der Schlauch relativ zu einem Heißprägewerkzeug bewegt wird. Eine Linienberührung zwischen Heißprägewerkzeug und Schlauch ermöglicht ein vollflächiges Aufprägen der Heißprägefolie unter Vermeidung von Lufteinschlüssen. Der Schlauch kann zur Heißprägung durch einen im wesentlichen ortsfesten Prägestempel durchgezogen werden. Zur Heißprägung können Heißprägewalzen vorgesehen sein, die vorzugsweise im wesentlichen Linienberührung mit der Heißprägefolie und dem Schlauch haben. Die Heißprägewalzen können relativ zum Schlauch wendelförmig umlaufend angeordnet sein. Für eine Heißprägung in Längsrichtung können auch mehrere in Längsrichtung laufende Heißprägewalzen vorgesehen sein, die seitlich und in axialer Richtung zueinander versetzt angeordnet sind. Nach dem Aufbringen der Heißprägefolie bzw. Heißprägefolien kann ein Hüllschlauch aus durchsichtigem und/oder durchscheinendem Material auf den mit der Heißprägefolie versehenen Kunststoffschlauch aufextrudiert werden.

Der mit der Heißprägefolie zu versehende vorgefertigte Schlauch kann von einer Vorratsrolle abgezogen werden. Es ist aber auch möglich, den Schlauch im wesentlichen unmittelbar vor der Heißprägung durch Extrusion eines thermoplastischen Kunststoffes, insbesondere PVC, herzustellen oder mit einer als Grundlage für die Heißprägefolie dienenden schlauchförmigen Zwischenschicht zu versehen und gegebenenfalls in das noch weiche Kunststoffmaterial die Verstärkungsfäden einzubetten und dann den frisch gebildeten, verfestigten aber noch warmen Kunststoffschlauch mit der Heißprägefolie zu versehen. Besitzt der mit der Heißprägefolie zu verbindende Schlauch eine unebene Oberfläche, dann wird der Schlauch vor dem Aufbringen der Heißprägefolie zweckmäßigerweise mit einem glatten Überzug versehen, insbesondere durch Aufextrudieren. So wird bei einer Ausführungsform der Erfindung ein Geflechtsschlauch mit einem flexiblen Innenschlauch und einem diesen lose umgebenden Geflechtsschlauch, so wie einem den Geflechtsschlauch umgebenden, insbesondere aufextrudierten Außenschlauch mit der Heißprägefolie belegt. Es ist auch hier möglich, den den Geflechtsschlauch umgebenden Außenschlauch erst kurz vor dem Aufbringen der Heißprägefolie aufzuextrudieren. Der mit der Heißprägefolie zu versenden Schlauch wird vorzugsweise als Meterware, d.h. in Form großer Schlauchlängen, eingesetzt und kontinuierlich mit der Heißprägefolie belegt. Eine solche kontinuierliche Heißprägung eignet sich mit Vorteil auch für die Beschichtung von Geflechtsschläuchen.

Durch eine besondere Mikrostruktur der Heißprägefolie können beim erfindungsgemäßen Schlauch besondere optische Effekte hervorgerufen werden. Diese Mikrostruktur kann bereits auf der Heißprägefolie vorgebildet sein, bevor sie mit dem Trägerschlauch verbunden wird. Vorzugsweise wird die Mikrostruktur bei der Herstellung des Schlauches, insbesondere während der Heißprägung gebildet. Die auf den Trägerschlauch aufgebrachte Heißprägefolie kann feinste linienförmige Vertiefungen und/oder Erhöhungen aufweisen, die insbesondere durch unterschiedliche relative Schrumpfungs- oder Dehnungsvorgänge zwischen Heißprägefolie und Trägerschlauch verursacht sein können. Ist diese Mikrostruktur erzeugt, bevor ein Außenschlauch aufextrudiert wird, was in der Regel der Fall ist, dann kann die Innenseite des Außenschlauches eine negative Abformung der Mikrostruktur der Heißprägefolie aufweisen, wodurch der optische Effekt verstärkt wird, z.B. durch optische Spiegelung und Linsenwirkung an der Innenfläche des aufextrudierten Außenschlauches. So kann bei einer Ausführungsform der Erfindung die metallisierte und/oder eingefärbte Oberflächenschicht der Heißprägefolie, einschließlich eines etwa vorhandenen Decklacks, eine unregelmäßige Rißbildung aufweisen in Form von feinsten Haarrissen, die teils parallel, teils sich kreuzend verlaufen. Diese Rißbildung kann dadurch zustande kommen, daß die Heißprägefolie nach dem Prägevorgang schrumpft, wobei die metallisierte bzw. eingefärbte Schicht diese Schrumpfung unter Rißbildung mitmacht. Die Mikrostruktur kann bei starker Vergrößerung etwa das Aussehen einer unter Rißbildung ausgetrockneten Erdkruste oder von Fingerabdrücken haben. Eine solche feine Mikrostruktur kann insbesondere in Verbindung mit einer metallisierten Heißprägefolie dem Schlauch das Aussehen von gebürsteten Metalloberflächen verleihen. Solche durch Haarrisse oder andere feinste Durchbrechungen der Metallisierung und/oder Einfärbung erzeugte Effekte können noch dadurch verstärkt werden, wenn der Trägerschlauch selbst aus farbigem, insbesondere schwarzem Material gefertigt ist, weil dann die Grundfarbe des Materials des Innenschlauches durch die Durchbrechungen durchscheinen kann. Die Größe der Durchbrechungen kann so klein gehalten werden, daß sie unterhalb des Auflösungsvermögens des Auges liegt, so daß das Durchscheinen des Untergrundes lediglich als Farbschimmer erkennbar ist.

Weitere Merkmale der Erfindung ergeben sich aus der nachfolgenden Beschreibung von bevorzugten Ausführungsformen in Verbindung mit der Zeichnung und den Ansprüchen. Hierbei können die einzelnen Merkmale jeweils für sich alleine oder zu mehreren miteinander in Kombination verwirklicht sein.

In der Zeichnung zeigen
- Fig. 1: eine Ansicht eines Abschnittes eines erfindungsgemäßen Kunstsstoffschlauches,
- Fig. 2: einen Querschnitt durch die Ausführungsform nach Fig. 1 entlang der Linie II - II,
- Fig. 3: einen Querschnitt durch eine andere Ausführungsform der Erfindung und
- Fig. 4: eine schematische Darstellung einer Prägestation.

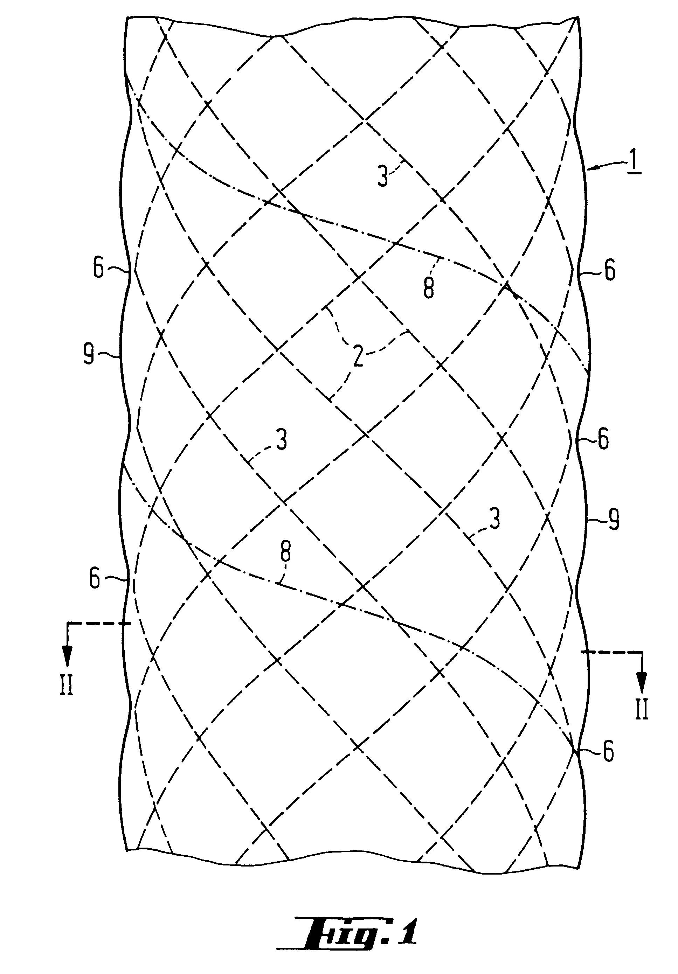

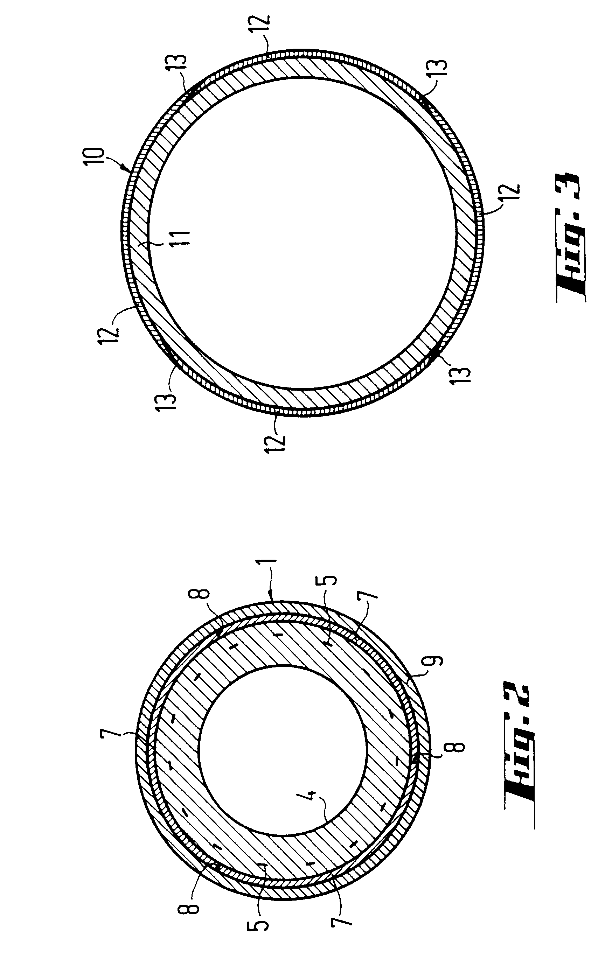

In den Fig. 1 und 2 ist ein flexibler sanitärer Brauseschlauch 1 aus Kunststoff dargestellt. Der Brauseschlauch hat eine glänzende Oberfläche und ist vollflächig metallicfarben silbrig chromglänzend. Er weist an seiner Oberfläche eine schwach ausgebildete Struktur von sich kreuzenden wendelförmig verlaufenden Vertiefungen 2 auf, die auf eine im Innern eingelagerte textile Fadenverstärkung 3 zurückzuführen ist. Der Brauseschlauch 1 ist als doppelwandiger Schlauch ausgebildet. Er hat einen Durchmesser von ca. 15 mm. Ein innerer Trägerschlauch 4 ist relativ dickwandig und besitzt eine Wandstärke von ca. 3 mm. Er ist durch Extrusion aus thermoplastischen Material, beispielsweise Weich-PVC (Polyvinylchlorid) hergestellt. Die Fadenverstärkung 3 ist in das Material des inneren Trägerschlauches 4 eingebettet. Bei der dargestellten Ausführungsform sind hierzu multifile Fäden 5 in sich kreuzendem wendelförmigem Verlauf während der Extrusion in das noch weiche Material eingedrückt. Die Einbettiefe der Fadenverstärkung beträgt ca. 1/4 der Wandstärke des Trägerschlauches 4, d.h. ca. 3/4 der Wandstärke des Trägerschlauches befinden sich innerhalb der Fadenverstärkung und 1/4 der Wandstärke außerhalb der Fadenverstärkung. In Folge der Eindrückung der multifilen Fäden 5, besitzt der Trägerschlauch 4 schwache rinnenförmige Vertiefungen 6 entlang dem Fadenverlauf, die die Struktur 2 bilden.

Auf die Außenfläche des inneren Trägerschlauches 4 sind wendelförmig umlaufende Bänder aus Prägefolie 7 vollflächig unter Ausbildung einer festen Verbindung aufgeprägt. Es verlaufen drei Bänder 7 parallel zueinander mit fugenlos aneinanderstoßenden Rändern 8. Die Wandstärke der Prägefolie 7 ist in der Zeichnung übertrieben dargestellt und beträgt lediglich ca. 4 µm. Die Heißprägefolie besteht aus einer Klebeschicht aus einem thermoplastischen Kunststoff mit wärmewirksamen Klebeeigenschaften, die auf ihrer Außenseite eine Metallisierung, beispielsweise eine Aluminiumbedampfung, aufweist. Zum Schutze der Metallisierung und zur Verstärkung des Schlauches weist dieser einen die Heißprägefolie 7 umgebenden Außenschlauch 9 auf, der ebenfalls aus Weich-PVC bestehen kann und eine Materialstärke von ca. 0,6 mm besitzt. Der Außenschlauch besteht aus farblosem durchsichtigem Material und verleiht der metallisierten Oberfläche des Trägerschlauches 4 einen Tiefenglanz, der dem Schlauch ein ästhetisch ansprechendes Aussehen verleiht. Der Außenschlauch 9 liegt auf der Heißprägefolie 7 bündig auf, ohne mit dieser flächig verbunden zu sein. Er ist deshalb bei Biegungen und Stauchungen des Brauseschlauches 1 relativ zum Trägerschlauch 4 in geringem Umfang verschieblich, was sich postitiv auf die Flexibilität des Brauseschlauches 1 auswirkt. Die Prägefolie 7 ist demgegenüber durch die vollflächige feste Verbindung mit dem Trägerschlauch 4 ein integrierter Bestandteil dessen und macht dessen Bewegungen mit, ohne daß die metallisierte Schicht Runzeln oder Risse bildet.

Da die Wandungen des Brauseschlauches massiv sind und eine im wesentlichen glatte Außenfläche besitzen, kann der Brauseschlauch an seinen Enden in einfacher Weise mit Anschlußnippeln zum Anschluß an die sanitären Geräte versehen werden, ohne daß besondere Vorkehrungen zur Herstellung der Dichtigkeit der Anschlüße getroffen werden müssen.

Fig. 3 zeigt eine Ausführungsform der Erfindung, die als Dekorschlauch 10 ausgebildet ist. Ein dünnwandiger fexibler Schlauch 11 aus thermoplastischen Material, beispielsweise PVC, besitzt einen Durchmesser von ca. 13 mm und eine Wandstärke von ca. 0,8 mm. An der Außenfläche des dünnwandigen Schlauches 11 verlaufen in Längsrichtung des Schlauches parallel zueinander vier Bänder 12 aus Heißprägefolie, die sich mit ihren Rändern 13 gegenseitig überlappen. Die Heißprägefolie ist hier wiederum mehrschichtig ausgebildet und weist eine Kleberschicht aus wärmewirksamem thermoplastischem Material auf, die an ihrer Außenseite durch Aluminiumbedampfung metallisiert ist. Die Schicht der Aluminiumbedampfung ist mit einer Schutzschicht versehen, die ebenfalls aus thermoplastischem Material besteht und eine überlappende Verbindung der Ränder 13 beim Heißprägen ermöglicht. Die Schutzschicht ist transparent und kann, wenn erwünscht, transparent eingefärbt sein, um der Metallisierung einen Farbeffekt zu verleihen.

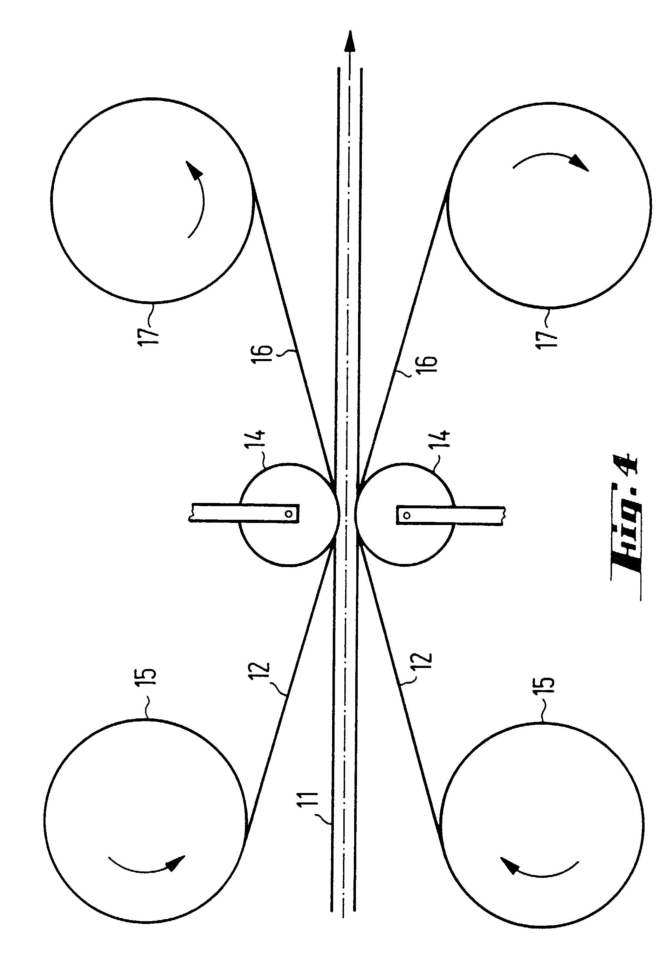

Fig. 4 zeigt in schematischer Darstellung eine Heißprägestation zur Herstellung des Schlauches nach Fig. 3. Der dünnwandige Schlauch 11 wird von einer nicht dargestellten Vorratsrolle abgezogen und im Inneren mit einem Luftdruck von ca. 1 bar beaufschlagt. Er wird zwischen zwei gegenüberliegenden Prägewalzen 14 hindurchgeführt, die auf ca. 160 ° C beheizt sind und an ihrem Außenumfang eine dem Schlauchradius entsprechende Hohlkehlung aufweisen. Zwei bandförmige Heißprägefolien 12 befinden sich auf Vorratsrollen 15 und sind auf Trägerfolien 16 gelagert. Die auf den Trägerfolien 16 gelagerten Bänder der Heißprägefolie 12 werden zusammen mit dem dünnwandigen Schlauch 11 zwischen den Prägewalzen 14 hindurchgezogen, wobei die Heißprägefolien 12 in Berührung mit der Schlauchoberfläche kommen und auf diese aufgeprägt werden. Durch die Hitzeübertragung wird die Klebeschicht der Heißprägefolien aktiv und schafft eine flächige und feste Verbindung der Heißprägefolie mit der Schlauchoberfläche. Durch die im wesentlichen linienförmige Berührung der Prägewalzen 14 mit der Außenfläche des dünnwandigen Schlauches 11 im Prägebereich und das Aufwalzen der Folie auf die Schlauchaußenfläche wird eine vollflächige Verbindung unter Vermeidung von Lufteinschlüssen erhalten. Nach Verlassen der Prägezone wird die leere Trägerfolie von der Heißprägefolie abgezogen und auf Folienrollen 17 für die leere Trägerfolie aufgewickelt. In einem Abstand von der ersten Prägestation um 90 ° versetzt, ist eine zweite in gleicher Weise aufgebaute Prägestation angeordnet, die zwei weitere Bänder von Heißprägefolie auf die noch freien Seitenflächen des Schlauches 11 aufprägt. Die Breite der Bänder ist größer als 1/4 des Außenumfanges des dünnwandigen Schlauches 11, so daß die Bänder mit gegenseitiger Überlappung aufgeprägt werden. Auf diese Weise ist eine vollflächige Metallisierung des Schlauches möglich. In besonderen Fällen ist, falls erwünscht, auch nur eine teilweise Metallisierung des Schlauches möglich. Zu diesem Zweck können Prägestempel bzw. Prägewalzen verwendet werden, die eine strukturierte Prägefläche mit Erhöhungen und Vertiefungen aufweisen. Auf diese Weise können auf dem Schlauch verlaufende Beschriftungen und/oder Bebilderungen erzeugt werden. In ähnlicher Weise können auch mehrere Bedruckungen mit verschiedenen Heißprägefolien zeitlich verschoben nacheinander mit gegenseitigem Versatz der Bedruckung aufgeprägt werden, um bestimmte Musterungen zu erzeugen. Falls erwünscht kann der Schlauch nach der Heißprägung mit einer zusätzllichen Schutzschicht an der Oberfläche, insbesondere durch Aufextrusion, versehen werden.

## Patentansprüche

1. Sanitärschlauch (1) und dergleichen, mit einer eingefärbten und/oder metallisierten Oberfläche, dadurch gekennzeichnet, daß er als Träger für die Farbe und/oder Metallisierung mindestens eine Heißprägefolie (7; 12) aufweist, die mit einer mindestens teilweise nach außen sichtbaren Außenseite eines vorgefertigten Schlauches (4; 11) verbunden ist und diese bedeckt.

2. Sanitärschlauch nach Anspruch 1, dadurch gekennzeichnet, daß die Heißprägefolie (7; 12) die Außenseite des Schlauches (4; 11) vollständig bedeckt.

3. Sanitärschlauch nach einem der vorhergehenden Ansprüche, dadurch gekennzeichnet, daß die die Farbe und/oder Metallisierung tragende Heißprägefolie (7; 12) mit einer Schutzschicht (8) überzogen ist.

4. Sanitärschlauch nach einem der vorhergehenden Ansprüche, dadurch gekennzeichnet, daß die Heißprägefolie mit einer mindestens stellenweise durchsichtigen und/oder durchscheinenden Schutzfolie (9) überzogen ist, die vorzugsweise eine aufextrudierte Schlauchfolie (9) ist.

5. Sanitärschlauch nach Anspruch 4, dadurch gekennzeichnet, daß die Schutzfolie ein Außenschlauch (9) eines mehrschichtigen, insbesondere doppelwandigen Schlauches (1) ist.

6. Sanitärschlauch nach einem der vorhergehenden Ansprüche, dadurch gekennzeichnet, daß die Heißprägefolie (7; 12) (ohne Folienträger) eine Stärke von 2,0 µm bis 20 µm, insbesondere 3 bis 5 µm besitzt.

7. Sanitärschlauch nach einem der vorhergehenden Ansprüche, dadurch gekennzeichnet, daß die Heißprägefolie eine Mikrostruktur aufweist, insbesondere in Form von feinen Vertiefungen und/oder Erhöhungen.

8. Sanitärschlauch nach einem der vorhergehenden Ansprüche, dadurch gekennzeichnet, daß ein Innenschlauch als im wesentlichen druckfester Trägerschlauch (4) ausgebildet ist, der mit der Heißprägefolie (7) umgeben ist, wobei eine textile Verstärkung vorzugsweise in den Trägerschlauch (4) eingebettet ist.

9. Sanitärschlauch nach einem der vorhergehenden Ansprüche, dadurch gekennzeichnet, daß der Schlauch (1) als Druckschlauch, insbesondere als Brauseschlauch ausgebildet ist.

10. Sanitärschlauch nach einem der vorhergehenden Ansprüche, dadurch gekennzeichnet, daß er ein flexibler, vorzugsweise dünnwandiger Dekorschlauch ist, der insbesondere als Überzugsschlauch für Leitungen, wie Rohr- und Schlauchleitungen, ausgebildet ist.

11. Sanitärschlauch nach einem der vorhergehenden Ansprüche, dadurch gekennzeichnet, daß der Schlauch, mit dem die Heißprägefolie verbunden ist, ein Kunststoffschlauch ist, der einen Geflechtschlauch mit einem flexiblen Schlauchgeflecht und einem in diesem lose angeordneten felxiblen Innenschlauch umgibt.

12. Sanitärschlauch nach Anspruch 11, dadurch gekennzeichnet, daß der Kunststoffschlauch auf den Geflechtsschlauch aufextrudiert ist.

13. Sanitärschlauch nach Anspruch 11 oder 12, dadurch gekennzeichnet, daß der flexible Inneschlauch aus elastomerem Material, insbesondere aus Gummi besteht.

14. Sanitärschlauch nach einem der vorhergehenden Ansprüche, dadurch gekennzeichnet, daß er an seinen Enden Anschlußteile zur wasserdichten Montage aufweist.

15. Verfahren zur Herstellung des Sanitärschlauches nach einem der vorhergehenden Ansprüche, dadurch gekennzeichnet, daß ein vorgefertigter Schlauch an seiner Außenseite mit mindestens einer mit einer Trägerbahn verbundenen Heißprägefolie belegt und die Folie durch Wärme- und Druckanwendung vollflächig und fest mit der Außenseite des Schlauches verbunden wird und die Trägerbahn danach abgezogen wird.

16. Verfahren nach Anspruch 15, dadurch gekennzeichnet, daß der Schlauch mindestens während des Belegens mit der Heißprägefolie und insbesondere während des Prägein im wesentlichen druckstabiler Form liegt.

17. Verfahren nach einem der Ansprüche 15 oder 16, dadurch gekennzeichnet, daß ein Schlauch verwendet wird, der aufgrund seiner Stabilität, insbesondere aufgrund der Materialfestigkeit und/oder Wandstärke, im wesentlichen druckstabil ist.

18. Verfahren nach einem der Ansprüche 15 bis 17, dadurch gekennzeichnet, daß der Schlauch während des Heißprägevorganges zur Erzielung der Druckstabilität innen mit einem Gasüberdruck beaufschlagt wird.

19. Verfahren nach einem der Ansprüche 15 bis 18, dadurch gekennzeichnet, daß der Schlauch vor dem Aufbringen der Heißprägefolie mit einer Bewehrung aus textilen Fäden versehen wird, die vorzugsweise in den Schlauch eingebettet wird.

20. Verfahren nach einem der Ansprüche 15 bis 19, dadurch gekennzeichent, daß der Schlauch, insbesondere bei unebener Oberfläche, vor dem Aufbringen der Heißprägefolie mit einem glatten Überzug, insbesondere durch Aufextrudieren, versehen wird.

21. Verfahren nach einem der Ansprüche 15 bis 20, dadurch gekennzeichnet, daß ein Geflechtsschlauch mit einem flexiblen Innenschlauch, einem diesen lose umgebenden Geflechtsschlauch und einem den Geflechtsschlauch umgebenden, insbesondere aufextrudierten Außenschlauch mit der Heißprägefolie belegt wird.

22. Verfahren nach Anspruch 21, dadurch gekennzeichnet, daß der den Geflechtsschlauch umgebende Außenschlauch erst kurz vor dem Aufbringen der Heißprägefolie aufextrudiert wird.

23. Verfahren nach einem der Ansprüche 15 bis 22, dadurch gekennzeichnet, daß der Schlauch als Meterware eingesetzt und kontinuierlich mit der Heißprägefolie belegt wird.

24. Verfahren nach einem der Ansprüche 15 bis 23, dadurch gekennzeichnet, daß der Schlauch zur Heißprägung durch einen relativ dazu im wesentlichen ortsfesten Prägestempel hindurchgezogen wird.

25. Verfahren nach einem der Ansprüche 15 bis 24, dadurch gekennzeichnet, daß die Heißprägung mit Hilfe von Heißprägewalzen vorgenommen wird, die vorzugsweise im wesentlichen Linienberührung mit dem mit der Heißprägefolie zu versehenden Schlauch haben.

26. Verfahren nach Anspruch 25, dadurch gekennzeichnet, daß die Heißprägewalzen relativ zum Schlauch wendelförmig umlaufend angeordnet sind.

27. Verfahren nach einem der Ansprüche 15 bis 26, dadurch gekennzeichnet, daß mehrere Heißprägewalzen relativ zum Schlauch in Längsrichtung laufend gegeneinander im Schlauchumfang versetzt angeordnet sind.

28. Verfahren nach einem der Ansprüche 15 bis 27, dadurch gekennzeichnet, daß nach dem Aufbringen der Heißprägefolie ein Hüllschlauch aus durchsichtigem und/oder durchscheinendem Material über den Schlauch extrudiert wird.

## Claims

1. Sanitary hose (1) or the like, having a coloured and/or metallized surface, characterized in that as the carrier for the colour and/or metallization it has at least one hot stamping film (7; 12), which is connected to an at least partly externally visible outside of a prefabricated hose (4; 11) and covers the latter.

2. Sanitary hose according to claim 1, characterized in that the hot stamping film (7; 12) completely covers the outside of the hose (4; 11).

3. Sanitary hose according to one of the preceding claims, characterized in that the colour and/or metallization-carrying hot stamping film (7, 12) is covered with a protective coating (8).

4. Sanitary hose according to one of the preceding claims, characterized in that the hot stamping film is covered with an at least zonally transparent and/or translucent protective film (9), which is preferably an extruded-on hose film (9).

5. Sanitary hose according to claim 4, characterized in that the protective film is an outer hose (9) of multilayer, particularly double-walled hose (1).

6. Sanitary hose according to one of the preceding claims, characterized in that the hot stamping film (7, 12) (without film carrier) has a thickness of 2.0 to 20 µm, particularly 3 to 5 µm.

7. Sanitary hose according to one of the preceding claims, characterized in that the hot stamping film has a microstructure, particularly in the form of fine depressions and/or elevations.

8. Sanitary hose according to one of the preceding claims, characterized in that an inner hose is constructed as a substantially pressure-resistant carrier hose (4), which is surrounded by the hot stamping film (7) and a textile reinforcement is preferably embedded in the carrier hose (4).

9. Sanitary hose according to one of the preceding claims, characterized in that the hose (1) is constructed as a pressure hose, particularly as a shower hose.

10. Sanitary hose according to one of the preceding claims, characterized in that it is a flexible, preferably thin-walled decorative hose, which is in particular constructed as a covering hose for lines, such as pipe and hose lines.

11. Sanitary hose according to one of the preceding claims, characterized in that the hose to which the hot stamping film is joined is a plastic hose, which surrounds a braided hose with a hose braiding and a flexible inner hose loosely arranged therein.

12. Sanitary hose according to claim 11, characterized in that the plastic hose is extruded onto the braided hose.

13. Sanitary hose according to claim 11 or 12, characterized in that the flexible inner hose is made from an elastomeric material, particularly rubber.

14. Sanitary hose according to one of the preceding claims, characterized in that it is provided at its ends with connecting parts for watertight fitting.

15. Sanitary hose for the production of the sanitary hose according to one of the preceding claims, characterized in that a prefabricated hose is covered on its outside with at least one hot stamping film joined to a carrier web and the film is joined in full-surface, firm manner to the outside of the hose by heat and pressure application and the carrier web is subsequently removed.

16. Process according to claim 15, characterized in that, at least during the covering with the hot stamping film and particularly during the stamping process, the hose is in a substantially pressure-stable form.

17. Process according to one of the claims 15 or 16, characterized in that use is made of a hose which, due to its stability and in particular material strength and/or wall thickness, is substantially pressure-stable.

18. Process according to one of the claims 15 to 17, characterized in that during the hot stamping process, the interior of the hose is subject to a gas overpressure for obtaining pressure stability.

19. Process according to one of the claims 15 to 18, characterized in that, prior to the application of the hot stamping film, the hose is provided with a reinforcement of textile threads, which are preferably embedded in the hose.

20. Process according to one of the claims 15 to 19, characterized in that the hose, especially in the case of an uneven surface, is provided with a smooth covering, particularly by extruding-on, prior to the application of the hot stamping film.

21. Process according to one of the claims 15 to 20, characterized in that a braided hose with a flexible inner hose, a braided hose loosely surrounding the latter and an outer hose surrounding the braided hose and which is in particular extruded-on, is covered with the hot stamping film.

22. Process according to claim 21, characterized in that the outer hose surrounding the braided hose is only extruded-on just prior to the application of the hot stamping film.

23. Process according to one of the claims 15 to 22, characterized in that the hose is used as a piece article and is continuously covered with the hot stamping film.

24. Process according to one of the claims 15 to 23, characterized in that, for hot stamping purposes, the hose is drawn through a stamping die substantially fixed relative thereto.

25. Process according to one of the claims 15 to 24, characterized in that hot stamping is carried out with the aid of hot stamping rollers, which have a preferably substantially linear contact with the hose to be provided with the hot stamping film.

26. Process according to claim 25, characterized in that the hot stamping rollers are arranged in helically rotating manner relative to the hose.

27. Process according to one of the claims 15 to 26, characterized in that several hot stamping rollers are arranged relative to the hose in longitudinally mutually displaced manner in the hose circumference.

28. Process according to one of the claims 15 to 27, characterized in that following the application of the hot stamping film an encasing hose made from transparent and/or translucent material is extruded over the hose.

## Revendications

1. Tuyau sanitaire (1) ou similaire, comportant une surface colorée et/ou métallisée, caractérisé en ce qu'il comprend en tant que support pour la couleur et/ou la métallisation au moins un film à estamper à chaud (7 ; 12) qui est relié à une face extérieure du moins en partie visible vers l'extérieur d'un tuyau préfabriqué (4 ; 11) et qui la recouvre.

2. Tuyau sanitaire selon la revendication 1, caractérisé en ce que le film à estamper à chaud (7 ; 12) recouvre complètement la face extérieure du tuyau (4 ; 11).

3. Tuyau sanitaire selon l'une quelconque des revendications précédentes, caractérisé en ce que le film à estamper à chaud (7 ; 12) portant la couleur et/ou la métallisation est revêtu d'une couche de protection (8).

4. Tuyau sanitaire selon l'une quelconque des revendications précédentes, caractérisé en ce que le film à estamper à chaud est revêtu d'un film de protection (9) au moins localement transparent et/ou translucide, qui est de préférence un film tubulaire (9) extrudé sur celui-ci.

5. Tuyau sanitaire selon la revendication 4, caractérisé en ce que le film de protection est un tuyau extérieur (9) d'un tuyau (1) à plusieurs couches, en particulier à paroi double.

6. Tuyau sanitaire selon l'une quelconque des revendications précédentes, caractérisé en ce que le film à estamper à chaud (7 ; 12) (sans porte-film) possède une épaisseur de 2,0 µm à 20 µm, en particulier de 3 à 5 µm.

7. Tuyau sanitaire selon l'une quelconque des revendications précédentes, caractérisé en ce que le film à estamper à chaud présente une microstructure, en particulier sous forme de cavités et/ou de bosses fines.

8. Tuyau sanitaire selon l'une quelconque des revendications caractérisé en ce qu'un tuyau intérieur est réalisé sous forme de tuyau porteur (4) sensiblement résistant à la pression qui est entouré du film à estamper à chaud (7), un renforcement textile étant noyé de préférence dans le tuyau porteur (4).

9. Tuyau sanitaire selon l'une quelconque des revendications précédentes, caractérisé en cc que le tuyau (1) est réalisé sous forme de tuyau sous pression, en particulier de tuyau de douche.

10. Tuyau sanitaire selon l'une quelconque des revendications précédentes, caractérisé en ce qu'il est un tuyau d'habillage flexible, de préférence à paroi mince, qui est réalisé en particulier sous forme de tuyau de revêtement pour des conduites, telles que des conduites à tube et à tuyau.

11. Tuyau sanitaire selon l'une quelconque des revendications précédentes, caractérisé en ce que le tuyau auquel est relié le film à estamper à chaud est un tuyau en matière synthétique qui entoure un tuyau tressé, comportant un treillis tubulaire flexible, et un tuyau intérieur flexible agencé de façon lâche dans celui-ci.

12. Tuyau sanitaire selon la revendication 11, caractérisé en ce que le tuyau en matière synthétique est extrudé sur le tuyau tressé.

13. Tuyau sanitaire selon l'une ou l'autre des revendications 11 et 12, caractérisé en ce que le tuyau intérieur flexible est constitué en un matériau élastomère, en particulier en caoutchouc.

14. Tuyau sanitaire selon l'une quelconque des revendications précédentes, caractérisé en ce qu'il comprend à ses extrémités des pièces de raccordement pour le montage étanche à l'eau.

15. Procédé pour la réalisation d'un tuyau sanitaire selon l'une quelconque des revendications précédentes, caractérisé en ce que l'on couvre un tuyau préfabriqué sur sa face extérieure avec au moins un film à estamper à chaud relié à une bande porteuse, en ce qu'on relie le film par application de chaleur et de pression sur toute la surface et fermement à la face extérieure du tuyau et en ce que l'on enlève ensuite la bande porteuse par pelage.

16. Procédé selon la revendication 15, caractérisé en ce que le tuyau se présente sous une forme sensiblement résistante à la pression au moins pendant le recouvrement avec le film à estamper à chaud et en particulier pendant l'opération d'estampage.

17. Procédé selon l'une ou l'autre des revendications 15 et 16, caractérisé en ce que l'on utilise un tuyau qui est sensiblement résistant à la pression en raison de sa solidité, en particulier de la solidité du matériau et/ou de l'épaisseur de paroi.

18. Procédé selon l'une quelconque des revendications 15 à 17, caractérisé en ce que l'on sollicite le tuyau à l'intérieur par une surpression de gaz pendant l'opération d'estampage à chaud pour obtenir la résistance à la pression.

19. Procédé selon l'une quelconque des revendications 15 à 18, caractérisé en cc que, avant de déposer le film à estamper à chaud, on pourvoit le tuyau d'une armature en fils textiles, qui est de préférence noyée dans le tuyau.

20. Procédé selon l'une quelconque des revendications 15 à 19, caractérisé en ce que l'on pourvoit le tuyau d'un revêtement lisse, en particulier lorsque la surface est irrégulière, en particulier par extrusion sur celui-ci, avant de déposer le film à estamper à chaud.

21. Procédé selon l'une quelconque des revendications 15 à 20, caractérisé en ce que l'on dépose le film à estamper à chaud sur un tuyau tressé comportant un tuyau intérieur flexible, un tuyau tressé entourant celui-ci de façon lâche et un tuyau extérieur entourant le tuyau tressé, en particulier extrudé sur celui-ci.

22. Procédé selon la revendication 21, caractérisé en ce que l'on extrude le tuyau extérieur entourant le tuyau tressé uniquement peu avant de déposer le film à estamper à chaud.

23. Procédé selon l'une quelconque des revendications 15 à 22, caractérisé en ce que l'on utilise un tuyau sans fin et en ce qu'on le pourvoit en continu du film à estamper à chaud.

24. Procédé selon l'une quelconque des revendications 15 à 23, caractérisé en ce que pour l'estampage à chaud, on fait passer le tuyau à travers un poinçon d'estampage sensiblement stationnaire par rapport à celui-ci.

25. Procédé selon l'une quelconque des revendications 15 à 24, caractérisé en ce que l'on effectue l'estampage à chaud à l'aide de rouleaux d'estampage à chaud qui sont de préférence en contact sensiblement linéaire avec le tuyau à pourvoir du film à estamper à chaud.

26. Procédé selon la revendication 25, caractérisé en ce que les rouleaux d'estampage à chaud sont agencés de manière à se déplacer par rapport au tuyau de façon hélicoïdale.

27. Procédé selon l'une quelconque des revendications 15 à 26, caractérisé en ce que plusieurs rouleaux d'estampage à chaud sont agencés de manière à se déplacer en direction longitudinale par rapport au tuyau et en opposition les uns par rapport aux autres à la périphérie du tuyau.

28. Procédé selon l'une quelconque des revendications 15 à 27, caractérisé en ce qu'après déposition du film à estamper à chaud, on extrude un tuyau enveloppe en matériau transparent et/ou translucide par-dessus le tuyau.
